# EUROPÄISCHE PATENTSCHRIFT

(11) **EP 0 508 069 B1**
(45) Veröffentlichungstag und Bekanntmachung des Hinweises auf die Patenterteilung: **08.11.1995**
(21) Anmeldenummer: 92102877.5
(22) Anmeldetag: 20.02.1992
(51) Int. Cl.: B29B 13/02, B29C 35/06, B29L 7/00

(54) **Vorrichtung zum Vorwärmen von Kunststoffolien**
Device for preheating of plastic foils
Dispositif pour préchauffer des feuilles en matière plastique

(30) Priorität: 08.04.1991 DE 4111315
(43) Veröffentlichungstag der Anmeldung: 14.10.1992
(73) Patentinhaber: PAUL KIEFEL GMBH, D-83395 Freilassing (DE)
(72) Erfinder: Bratsch, Kurt, A-5020 Salzburg (AT)
(74) Vertreter: Zmyj, Erwin, Dipl.-Ing., Dipl.-Wirtsch.-Ing.

(56) Entgegenhaltungen:
- DE-B- 1 151 922
- DE-U- 8 527 284
- FR-A- 1 416 462
- FR-A- 1 457 153
- US-A- 4 196 158

## Beschreibung

Die Erfindung bezieht sich auf eine Vorrichtung zum Erwärmen von Kunststoffolien für die Verarbeitung in Tiefziehanlagen, bei der die Folie in einer mittels umgewälzter Heißluft beheizten Kammer über mehrere Walzen geführt und dabei durch die Heißluft und den Kontakt mit den Walzen erwärmbar ist.

Bei einer bekannten Vorrichtung dieser Art (US-A-4,126,158) sind mehrere Walzen in einer Kammer vorgesehen, über die die Folie mit großem Umschlingungswinkel geführt ist, um einen möglichst großen Wärmekontakt zu den Walzen zu erzielen. Die Walzen sind durch Öl beheizt und dienen dazu, die außerhalb der Kammer beispielsweise mit Heizstrahlern aufgeheizte Folie so zu konditionieren, daß Temperaturdifferenzen aufgrund von unterschiedlichen Dicken der Folie ausgeglichen werden. Bei dieser bekannten Vorrichtung sind, da es auf einen möglichst großen Wärmekontakt zwischen Folie und Walzen ankommt, die Walzen verhältnismäßig eng zueinander angeordnet, um einen großen Umschlingungswinkel zu erzielen, so daß sich einerseits eine geringe Folienlänge innerhalb der Kammer ergibt, die für eine nachfolgende Bearbeitung in einer Tiefziehmaschine unter Umständen nicht ausreichend ist und andererseits ist die Einwirkung der Heißluft auf die Folie beschränkt, da die Erwärmung in erster Linie durch Wärmekontakt mit den Walzen erfolgt. Nachteilig ist hierbei, daß sowohl die Öltemperatur für die Beheizung der Walzen als auch die Lufttemperatur innerhalb der Kammer und die Antriebsgeschwindigkeit sämtlicher Walzen gesondert geregelt werden muß, was einen verhältnismäßig hohen Aufwand mit sich bringt.

Aus der DE-B-1 151 922 ist eine Vorrichtung zum Vorwärmen von Kunststoffolien bekannt, bei der innerhalb einer Kammer, die mit Heißluft beheizbar ist, mehrere Walzen angeordnet sind, die zu einer meanderförmigen Führungsbahn für die Folie führen. Trotz dieser Maßnahme erfolgt die Erwärmung der Kunststoffolie in erster Linie durch Wärmekontakt, da die Folie für ihren Transport zwischen zwei wärmeleitenden Transportbehältern aufgenommen ist, wobei diese Transportbänder durch angetriebene Walzen am Anfang der Kammer angetrieben werden. Da die Wärmeeinwirkung nicht direkt von der Heißluft auf die Kunststoffolie erfolgt, sondern über die Wärmeleitung der Transportbänder, muß zwangsläufig die Heißluft in ihrer Temperatur höher eingestellt werden, um diesen Wärmeverlust, der beim Wärmedurchgang durch die Transportbänder erfolgt, auszugleichen. Dies hat den Nachteil, daß bei Betriebsunterbrechungen die Folie unter Umständen zu hoch aufgeheizt wird, weil dann aufgrund des längeren Aufenthaltes der Folie in der Kammer und der höheren Heißlufttemperatur auch eine höhere Temperatur der Kunststoffolie erreicht wird, was unter Umständen zu einer Zerstörung der Folie führen kann.

Aufgabe der Erfindung ist es, eine Vorrichtung der eingangs erläuterten Art so auszugestalten, daß bei einem geringen Aufwand hinsichtlich konstruktiver Mittel und Steuerungsvorrichtungen die Erwärmung der Folie und deren Transport unabhängig von dem Format des Formwerkzeuges mit stets gleichbleibender Temperatur erfolgt, ohne daß Maßnahmen gegen eine mögliche Überhitzung der Folie bei Arbeitsunterbrechungen notwendig wären.

Diese Aufgabe wird ausgehend von einer Vorrichtung der eingangs erläuterten Art erfindungsgemäß dadurch gelöst, daß die Walzen in zwei Reihen im oberen bzw. im unteren Bereich der Kammer einander gegenüberliegend mit solchem Abstand angeordnet sind, daß die in Schleifen abwechselnd über die einander zugeordneten Walzen der beiden Reihen geführte Folie innerhalb der Kammer eine Länge aufweist, die einem Mehrfachen der für eine Arbeitstakt des Formwerkzeuges benötigten Folienlänge entspricht, daß die durch die umgewälzte Heißluft erwärmten Walzen mit Ausnahme der in Laufrichtung der Folie letzten Walze frei drehbar gelagert sind, daß die letzte Walze antreibbar ist und die Folie mittels einer frei drehbar gelagerten Andrückwalze gegen die antreibbare Walze andrückbar ist.

Da die Walzen innerhalb der Kammer mit Ausnahme der letzten Walze frei drehbar gelagert und ausschließlich durch die in die Kammer eingeführte Heißluft beheizt werden, so daß die Erwärmung der Folie einerseits durch den Kontakt mit den Walzen und andererseits durch die Heißluft erfolgt, ist sowohl der konstruktive Aufwand für den Antrieb als auch der Aufwand für die Steuerung gering, da nur eine Walze antreibbar ist und nur die Temperatur der Heißluft geregelt werden muß. Da der Antrieb der Folie nur mittels der letzten Walze erfolgt, ergibt sich ein verhältnismäßig einfacher konstruktiver Aufwand, da nur auf eine Leichtgängigkeit bei der Drehbarkeit der Walzen geachtet werden muß, um die Folie über sämtliche Walzen mittels einer einzigen angetriebenen Walze ziehen zu können. Um den Schlupf an dieser angetriebenen Walze zu vermeiden, wird die Folie durch eine weitere Walze gegen die angetriebene Walze gedrückt. Da die Folie innerhalb der mit Heißluft beheizten Kammer schleifenförmig über mehrere Walzen geführt ist, befindet sich eine große Länge der vorzuwärmenden Folienbahn innerhalb der Kammer, wobei diese Länge dem Mehrfachen derjenigen Länge entspricht, die bei einem Arbeitstakt in der Tiefziehanlage zur Verfügung gestellt werden muß. Hierdurch ergibt sich eine verhältnismäßig lange Verweilzeit der Folie innerhalb der Kammer, wodurch es möglich ist, die Temperatur der Heißluft nur geringfügig über derjenigen Temperatur einzustellen, die die Folie nach Beendigung der Vorwärmung aufweisen soll. Eine Überhitzung der Folie ist dadurch nicht möglich. Da sich die Walzen innerhalb der mit Heißluft beheizten Kammer befinden, nehmen sie die Temperatur dieser Heißluft an, wodurch die Folie durch den mehrfachen Kontakt mit den Walzen einerseits und durch die Heißluft andererseits aufgewärmt wird. Hierdurch ist eine Vorwärmung der Folie in stets gleichbleibender Weise möglich, d.h. die gewünschte Endtemperatur der Folie wird stets erreicht, da die Folie bei langer Verweilzeit nicht nur in innigem Kontakt mit mehreren Walzen steht, über die sie gezogen wird, wodurch ein besonders guter Kontakt zwischen Walzen und Folie entsteht, sondern die Folie wird zusätzlich durch die direkt auf sie einwirkende Heißluft erwärmt. Da eine wesentlich größere Folienlänge vorgewärmt wird, als sie für den jeweiligen Formvorgang des Arbeitstaktes benötigt wird, kann aus der Kammer jeweils soviel Folie abgezogen werden, wie dies für die nachfolgende Verarbeitung benötigt wird. Die Vorrichtung ist also von dem Format des Formwerkzeuges unabhängig.

Es ist vorteilhaft, wenn die Länge der Walzen die Folienbreite übersteigt. Hierdurch können Querdehnungen der Folie erfolgen, ohne daß dies irgendwelche Maßnahmen zum Ausgleich dieser Foliendehnungen erfordern würde.

Eine automatische Anpassung der beim Formvorgang erforderlichen vorgewärmten Folienlänge wird in weiterer Ausgestaltung der Erfindung durch eine Steuereinrichtung erreicht, die den Antrieb für die antreibbare Walze im Takt der Verarbeitung der Folie und in Abhängigkeit von der Formatgröße des Formwerkzeuges steuert.

Um ein Austreten von Heißluft aus der Kammer weitgehend zu vermeiden, weist in weiterer vorteilhafter Ausgestaltung der Erfindung die Kammer Schlitze zum Hinein- und Herausführen der Folie auf und die Schlitze sind mit an der Folie von beiden Seiten anliegenden Dichtungen versehen.

Um die Reibkräfte zwischen Folie und Dichtung möglichst gering zu halten, damit durch den Antrieb keine übermäßige Dehnung der Folie eintritt, empfiehlt es sich, daß die Dichtungen als Bürsten ausgebildet sind.

Es empfiehlt sich, in der Kammer eine elektrische Heizung mit zwangsweiser Luftumwälzung vorzusehen, und die Heizleistung und/oder die Luftumwälzung regelbar zu gestalten. Elektrische Heizungen sind nämlich einfach zu installieren, leicht zu regeln und erfordern auch einen verhältnismäßig geringen Platz. Wenn sowohl die Heizleistung als auch die Intensität der Luftumwälzung regelbar sind, so ist die Einstellung der gewünschten Vorwärmtemperatur bei der Folie ohne weiteres möglich.

Es empfiehlt sich, daß die Temperatur der Heißluft auf eine konstante Temperatur einstellbar ist, die vorzugsweise nur geringfügig über derjenigen Temperatur liegt, die die Folie nach ihrer Vorwärmung aufweisen soll.

Die Erfindung wird nachfolgend anhand eines in der Zeichnung dargestellten Ausführungsbeispieles einer Vorrichtung zum Vorwärmen von Kunststoffolien erläutert. In der Zeichnung zeigen:

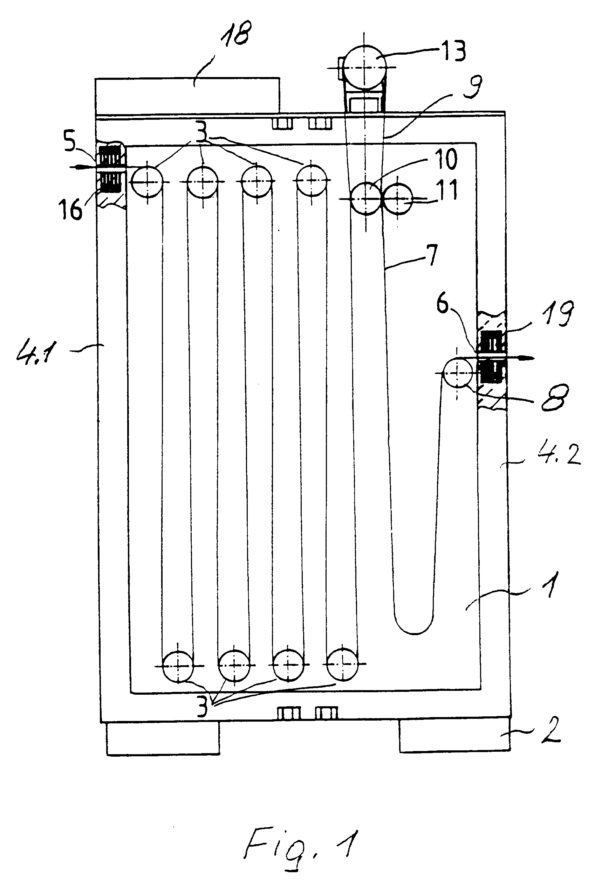

- Figur 1:: eine teilweise geschnittene Ansicht der Vorrichtung mit abgenommener Tür; und

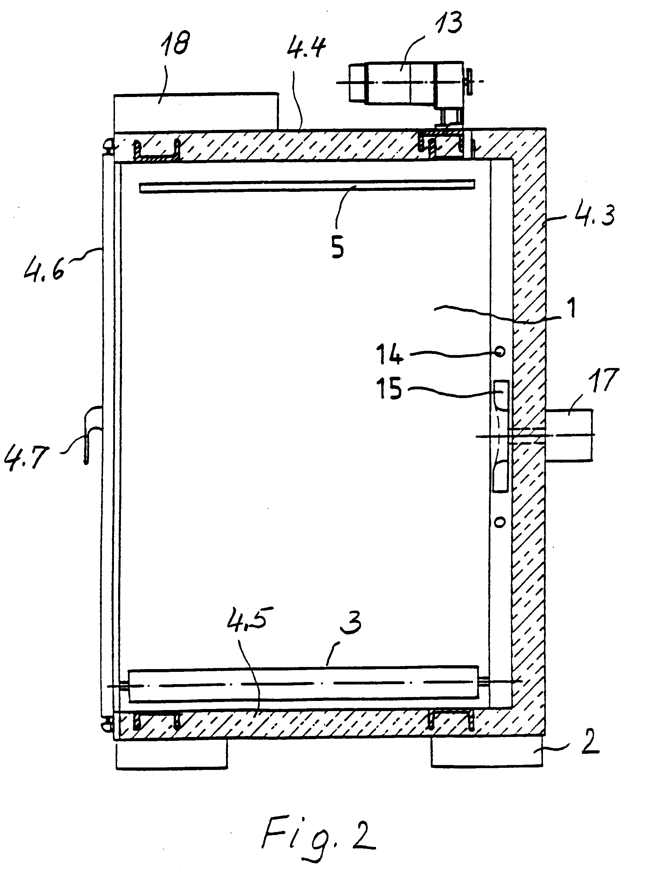

- Figur 2:: einen Schnitt durch die Vorrichtung gemäß Figur 1 in einer senkrecht zur Zeichenebene stehenden Ebene.

Wie aus der Zeichnung ersichtlich, sind innerhalb einer Kammer 1 mehrere Walzen 3 drehbar gelagert, von denen der eine Teil der Walzen im oberen Bereich und der andere Teil der Walzen im unteren Bereich der Kammer 1 jeweils in Reihe angeordnet sind. Die Kammer ist innerhalb eines Schrankes gebildet, der auf Füßen 2 steht und Seitenwände 4.1, 4.2, eine Rückwand 4.3, eine Decke 4.4 und einen Boden 4.5 aufweist. Dieser Schrank ist durch eine Tür 4.6 mit Handgriff 4.7 verschließbar.

In der linken Seitenwand 4.1 ist im oberen Bereich ein Schlitz 5 für den Einlaß einer Folie 7 vorgesehen, die mittels nicht dargestellter Führungseinrichtungen diesem Schlitz zugeführt wird. Die Folie wird in mehreren Schleifen, ausgehend von der ersten oberen Walze zur ersten unteren Walze, von dort zur zweiten oberen Walze, dann zur zweiten unteren Walze usw. geführt, so daß sich eine verhältnismäßig lange Bahn der Folie 7 in der Kammer 1 befindet. Im oberen Bereich der Kammer ist am Ende der Walzenreihe eine antreibbare Walze 10 vorgesehen, gegen die die Folie 7 mittels einer weiteren Walze 11 zur Vermeidung eines Schlupfes der Folie auf der Walze 10 andrückbar ist. Der Antrieb der Walze 10 erfolgt mittels eines Motors 13, der auf der Decke 4.4 der Kammer 1 angeordnet ist. Nach dieser antreibbaren Walze hängt die Folie noch in einer losen Schleife durch und ist dann über eine Walze 8 geführt, die vor einem Schlitz 6 in der rechten Seitenwand 4.2 angeordnet ist. Aus dem Schlitz 6 tritt die Folie aus der Kammer wieder aus. Der Antrieb der Walze 10 erfolgt mittels eines außerhalb des Schrankes vom Motor zur Walze verlaufenden Riemens 9.

An der Rückwand 4.3 der Kammer 1 ist eine Heizung 14 schematisch angedeutet, die aus geschlossen Heizrohren besteht und ein Lüfterrad 15 konzentrisch umgibt, das durch einen Motor 17 antreibbar ist. Durch dieses Lüfterrad wird die Luft in der Kammer 1 umgewälzt und dabei durch die Heizung 14 erhitzt. Die Steuerung der Leistung der Heizung 14 sowie die Steuerung der Antriebsmotoren 13 und 17 erfolgt mittels einer in einem Schaltkasten 18 auf der Decke 4.4 angeordneten Steuerungseinrichtung. Dabei dient ein nicht dargestellter Meßfühler zur Erfassung der Temperatur innerhalb der Kammer 1. Die Regelungseinrichtung ist vorzugsweise als elektronischer 2-Punkt-Regler ausgeführt.

Um ein Austreten der Heißluft aus den Schlitzen 5 und 6 zu verhindern, sind in jedem Schlitz zu beiden Seiten an der Folie anliegende Dichtungen 16 bzw. 19 in Form von Bürsten vorgesehen. Die Bürsten 16 und 19 sind deshalb vorteilhaft, weil sie nur geringe Reibkräfte auf die Folie ausüben, die mittels der angetriebenen Walze 10 durch die Kammer hindurchgezogen werden muß. Bei starken Reibkräften, die von der Dichtung verursacht sind, würde eine zu starke Dehnung der Folie eintreten, weil die Walzen 3 nicht angetrieben, sondern frei drehbar sind, so daß die gesamte Zugerzeugung einzig und allein von der Walze 10 ausgeht, die sich am Ende der mäanderförmig geführten Folienbahn befindet.

Da sich die Walzen 3 ständig in der beheizten Kammer befinden, nehmen diese die Temperatur der in der Kammer aufgeheizten Luft an, so daß die Folie 7 nicht nur durch die umgewälzte Luft, sondern auch durch Kontakt an den Walzen 3 erwärmt wird. Da aufgrund der schleifenförmigen Führung der Folie eine lange Folienbahn innerhalb einer verhältnismäßig kleinen Kammer untergebracht werden kann, woraus sich eine lange Verweilzeit der Folie innerhalb der beheizten Kammer 1 ergibt, ist gewährleistet, daß die Folie, die in der Kammer herrschende Temperatur annimmt und somit bei entsprechender Regelung der Lufttemperatur innerhalb der Kammer, stets mit der gewünschten Temperatur die Kammer verläßt.

## Patentansprüche

1. Vorrichtung zum Erwärmen von Kunststoffolien für die Verarbeitung in Tiefziehanlagen, bei der die Folie in einer mittels umgewälzter Heißluft beheizten Kammer (1) über mehrere Walzen (3) geführt und dabei durch die Heißluft und den Kontakt mit den Walzen (3) erwärmbar ist, **dadurch gekennzeichnet,** daß die Walzen (3) in zwei Reihen im oberen bzw. im unteren Bereich der Kammer (1) einander gegenüberliegend mit solchem Abstand angeordnet sind, daß die in Schleifen abwechselnd über die einander zugeordneten Walzen (3) der beiden Reihen geführte Folie (7) innerhalb der Kammer eine Länge aufweist, die einem Mehrfachen der für einen Arbeitstakt des Formwerkzeuges benötigten Folienlänge entspricht, daß die durch die umgewälzte Heißluft erwärmten Walzen (3) mit Ausnahme der in Laufrichtung der Folie (7) letzten Walze (10) frei drehbar gelagert sind, daß die letzte Walze (10) antreibbar ist und daß die Folie (7) mittels einer frei drehbar gelagerten Andrückwalze (11) gegen die antreibbare Walze (10) andrückbar ist.

2. Vorrichtung nach Anspruch 1, **dadurch gekennzeichnet,** daß die Länge der Walzen (3) die Folienbreite übersteigt.

3. Vorrichtung nach Anspruch 1 oder 2, **gekennzeichnet durch** eine Steuereinrichtung, die den Antrieb (13) für die antreibbare Walze (10) im Takt der Verarbeitung der Folie (7) und in Abhängigkeit von der Formatgröße des Formwerkzeuges steuert.

4. Vorrichtung nach einem der Ansprüche 1 bis 3, **dadurch gekennzeichnet,** daß die Kammer (1) Schlitze (5, 6) zum Hinein- und Herausführen der Folie (7) aufweist, und daß die Schlitze (5, 6) mit an der Folie (7) von beiden Seiten anliegenden Dichtungen (16, 19) versehen sind.

5. Vorrichtung nach Anspruch 4, **dadurch gekennzeichnet,** daß die Dichtungen (16, 19) als Bürsten ausgebildet sind.

6. Vorrichtung nach einem der Ansprüche 1 bis 5, **dadurch gekennzeichnet,** daß in der Kammer (1) eine elektrische Heizung (14) mit zwangsweiser Luftumwälzung (15) vorgesehen ist.

7. Vorrichtung nach Anspruch 6, **dadurch gekennzeichnet,** daß die Heizleistung und/oder die Luftumwälzung regelbar sind.

8. Vorrichtung nach Anspruch 7, **dadurch gekennzeichnet,** daß die Temperatur der Heißluft auf eine konstante Temperatur einstellbar ist.

## Claims

1. Device for heating plastic films for processing in thermoforming installations, in which the film is guided over a plurality of rolls (3) in a chamber (1) heated by means of circulated hot air and can thus be heated by the hot air and by contact with the rolls (3), characterised in that the rolls (3) are arranged opposite one another in two rows in the upper and lower regions of the chamber (1) at such a distance that the film (7) guided in loops alternately over the associated rolls (3) of the two rows has a length within the chamber corresponding to a multiple of the film length required for one moulding cycle of the thermoforming tool, that the rolls (3) heated by the circulated hot air are mounted to rotate freely with the exception of the last roll (10) in the feed direction of the film (7), that the last roll (10) is drivable and that the film (7) can be pressed against the drivable roll (10) by means of a pressure roll (11) mounted to rotate freely.

2. Device according to claim 1, characterised in that the length of the rolls (3) exceeds the film width.

3. Device according to claim 1 or claim 2, characterised by a control means which controls the drive (13) for the drivable roll (10) in time with the processing of the film (7) and as a function of the dimensions of the thermoforming tool.

4. Device according to one of claims 1 to 3, characterised in that the chamber (1) has slits (5, 6) for the insertion and removal of the film (7) and that the slits (5, 6) are provided with seals (16, 19) bearing against the film (7) on either side.

5. Device according to claim 4, characterised in that the seals (16, 19) are designed as brushes.

6. Device according to one of claims 1 to 5, characterised in that an electric heater (14) with forced air circulation (15) is provided in the chamber (1).

7. Device according to claim 6, characterised in that the heating capacity and/or the air circulation are controllable.

8. Device according to claim 7, characterised in that the temperature of the hot air can be regulated at a constant temperature.

## Revendications

1. Dispositif de préchauffage de feuilles de matière plastique pour le façonnage dans des installations d'emboutissage profond, dans lequel la feuille est guidée sur plusieurs cylindres (3) dans une chambre (1) chauffée au moyen d'air chaud de circulation et peut ainsi être préchauffée par l'air chaud et par le contact avec les cylindres (3), caractérisé en ce que les cylindres (3) sont disposés en deux rangées, respectivement dans la zone supérieure et dans la zone inférieure de la chambre (1) les uns en face des autres avec un écartement tel que la feuille (7), guidée en boucles en alternance sur les cylindres (3) coordonnés des deux rangées, présente à l'intérieur de la chambre une longueur, qui correspond à un multiple de la longueur de feuille nécessitée par un cycle de travail de l'outil de formage, en ce que les cylindres (3) chauffés par l'air chaud de circulation, sont montés de manière à tourner librement, à l'exception du dernier cylindre (10) dans le sens de passage de la feuille (7), en ce que le dernier cylindre (10) peut être actionné et en ce que la feuille (7) peut être pressée contre le cylindre (10), propre à être actionné, au moyen d'un cylindre-presseur (11) monté de manière à tourner librement.

2. Dispositif selon la revendication 1, caractérisé en ce que la longueur des cylindres (3) dépasse la largeur de la feuille.

3. Dispositif selon la revendication 1 ou 2, caractérisé en ce que par un dispositif de commande, qui commande l'entraînement (13) pour le cylindre (10), propre à être actionné, en cadence avec le façonnage de la feuille (7) et en fonction de la grandeur de mise en forme de l'outil de formage.

4. Dispositif selon l'une des revendications 1 à 3, caractérisé en ce que la chambre (1) présente des fentes (5, 6) pour l'entrée et pour la sortie de la feuille (7), et en ce que les fentes (5, 6) sont pourvues de garnitures (16, 19) appliquées des deux côtés contre la feuille (7).

5. Dispositif selon la revendication 4, caractérisé en ce que les garnitures (16, 19) sont conçues en tant que balais.

6. Dispositif selon l'une des revendications 1 à 5, caractérisé en ce qu'il est prévu, dans la chambre (1), un chauffage électrique (14) avec circulation d'air forcée (15).

7. Dispositif selon la revendication 6, caractérisé en ce que la puissance de chauffage et/ou la circulation d'air sont réglables.

8. Dispositif selon la revendication 7, caractérisé en ce que la température de l'air chaud peut être réglée à une température constante.
